# EUROPEAN PATENT SPECIFICATION

(11) **EP 3 445 018 B1**
(45) Date of publication and mention of the grant of the patent: **18.08.2021**
(21) Application number: 17189936.2
(22) Date of filing: 07.09.2017
(51) Int. Cl.: H04W 52/02, H04L 29/08, H04L 29/06, H04W 4/80, H04L 12/24

(54) **METHOD AND SYSTEM FOR UPGRADING FIRMWARE AND CONFIGURATION OF A LOW DATA RATE RF MODULE USING BLUETOOTH**
VERFAHREN UND SYSTEM ZUR AKTUALISIERUNG VON FIRMWARE UND KONFIGURATION EINES RF-MODULS MIT NIEDRIGER DATENRATE MITTELS BLUETOOTH
PROCÉDÉ ET SYSTÈME DE MISE À NIVEAU DE MICROLOGICIEL ET CONFIGURATION D'UN MODULE RF À FAIBLE DÉBIT DE DONNÉES FAISANT APPEL À LA TECHNOLOGIE BLUETOOTH

(30) Priority: 15.08.2017 US 201762545885 P
(43) Date of publication of application: 20.02.2019
(73) Proprietor: MatchX GmbH, 10999 Berlin (DE)
(72) Inventor: Hu, Xin, 10999 Berlin (DE)
(74) Representative: Antevski, Zlatko

(56) References cited:
- WO-A1-2017/019238
- US-A1- 2017 187 807

## Description

### FIELD OF THE INVENTION

An embodiment of the invention relates to a method for upgrading firmware and configuration of a low data rate RF module. More particularly, it provides a mechanism to transfer a large amount of data packets that are limited for low data rate RF module. The low-data rate module usually runs on regulated ISM bands with protocols like Sigfox and LoraWAN in 433MHz, 863-870MHz and 902-928MHz.

### BACKGROUND OF THE INVENTION

Low data rate modules enable to reach longer range and operate longer battery life than the existing short-range wireless technologies like WiFi and GSM. Low data rate technologies use regulate ISM bands that usually limit the access of the spectrum after the previous usage, and the bandwidth of these radios are much less than their short-range counterparts. Most importantly, they are programmed to be inactive for saving the power at the majority of time. The communication between low data rate RF module and cloud can be less than 10 times a day depending on the use cases.

There are several situations where firmware upgrade is imperative. First, bug fixes of a part of the logic that could result in the dead lock or freeze of the device.
Second, security updates that could let the others break into the system and manipulate all the devices. Besides that, configuring the devices for the deployment also takes time and efforts.

Some low data rate RF modules do support upgrade and configuration by using UART, USB, Ethernet mechanisms or SD cards. These methods increase the time costs of the field engineers and may leave security backdoors for people to access the physical interface of the devices. On the other hand, the end devices are deployed usually at the places where people are not easy to reach. For example, they are buried underground, placed under the shelf or mounted on the ceilings. Massively upgrading these devices would be a nightmare for the system integrators.

Emerging solutions like using the low data rate packets to upgrade the end devices pose hard burden on the regulated ISM bands, and will jam the network when transferring the large data packets. Due to the limitation of the regulated ISM bands, the transmission of the packets will take days or weeks in ideal cases. If there is any packet lost or the integrity check is wrong, the system should retransmit that part of the packet, this will add more burden on the ISM bands and the whole system.

Low data rate technologies have already become a de facto standard for Internet of Things. In the future, they will need to connect thousands of millions of street lights, water pipes, bikes and freight containers. The market demands a more robust, reliable and practical device management method, and end-to-end solutions.
There are two closest prior arts in relation to this invention:
D1 WO2017/019238 A1 (INTEL IP CORP [US]) 2 February 2017 (2017-02-02)
D2 US 2017/187807 A1 (CLERNON GEORGE F [US]) 29 June 2017 (2017-06-29)
D1 provides system for upgrading firmware of a CloT device which activates based on one or more activation commands received by the first and second receiver. The CloT device is connected with the device by the second receiver and the second transmitter and when it receives the firmware upgrade file by the second receiver the CloT device deactivates the second receiver.
D2 provides a method, a device and non-transitory storage medium for installation of an IoT device in which installation are stored Internet of Things (IoT) management information; are uploaded the IoT management information to a network device in response to the storing of the IoT management information; are stored the IoT management information at the IoT device in response to the upload; is presented a map of the location; is received a designation of a location point on the map that indicates where the IoT device is to be installed; is determined whether the IoT device is to be updated; is updated the IoT device in response to a determination that an update for the IoT device is available; are calibrated one or more sensors of the IoT device and is configured the IoT device to transmit IoT data to another network device

### SUMMARY OF THE INVENTION

The invention is defined by a system according to claim 1 and a method according to claim 6. Further embodiments are defined by the dependent claims. The invention eliminates the need for physically connecting the end devices for the configuration and downloading mode. Instead, they are managed remotely in the cloud server. Furthermore, the invention provides a reliable and robust way of configuring and upgrading the end device.

### BRIEF DESCRIPTION OF THE DRAWINGS

One or more embodiments of the invention will be explained in reference with the accompanying drawings:
FIG. **1** represents the block diagram of the system with an embodiment of the invention;
FIG. **2** represents an embodiment of the physical initialization of the Bluetooth configuration for the end device;
FIG. **3** represents an embodiment of the cloud initialization of the Bluetooth configuration for the end device;
FIG. **4** represents an embodiment of the flowchart of the mobile application;
FIG. **5** represents the block diagram of the end device with an embodiment of the invention;
FIG. **6** represents the memory map of the end device with an embodiment of the invention; and
FIG. **7** represents the flowchart of the remote cloud management.

### DETAIL DESCRIPTIONS OF THE INVENTION

All illustrations of the drawings are for the purpose of describing selected versions of the present invention and are not intended to limit the scope of the present invention.

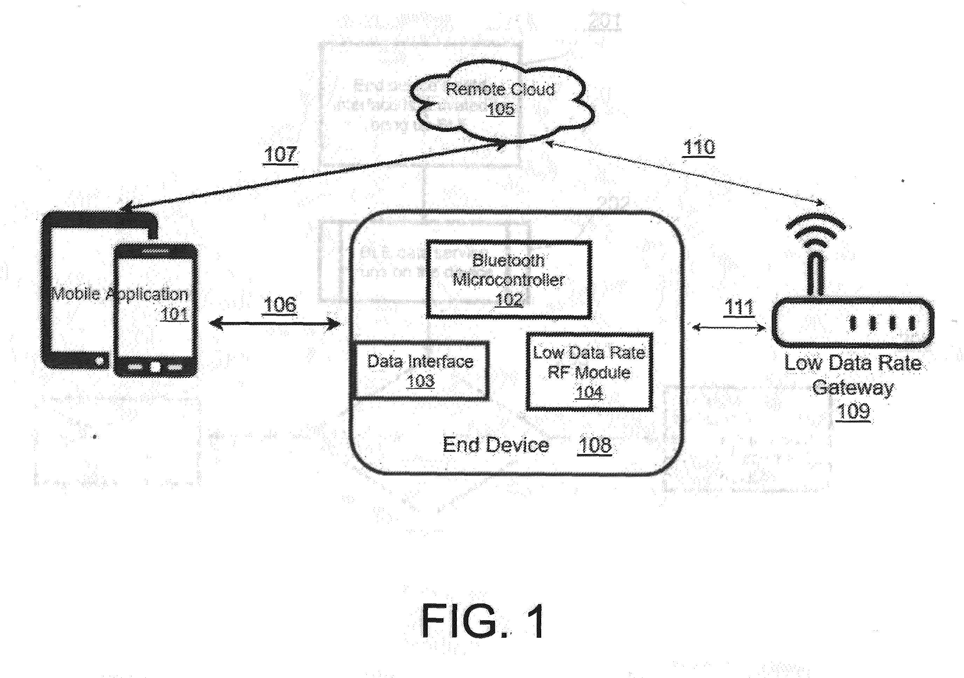

FIG. **1** represents a block diagram of the system in accordance with an embodiment of the invention. It contains an end device **108,** low data rate gateway **109,** mobile application **101** and remote cloud **105.**

The mobile application and low data rate gateway both connect to the remote cloud through Internet. Mobile device and the gateway device receives the data **107** and **110** for communicating with the end device. After receiving the commands that can activate the Bluetooth services, the gateway **109** sends the low data rate packets **111** to the end device **108.** The low data rate RF module **104** receives the packets and then the Bluetooth microcontroller **102** parses the commands. The command invoke Bluetooth services, can be either data interface configuration like reading or writing, and firmware upgrade. The Bluetooth connection **106** is established between end device **108** and mobile application **101** for the said firmware upgrade and configuration of the low data
rate RF module **104.**

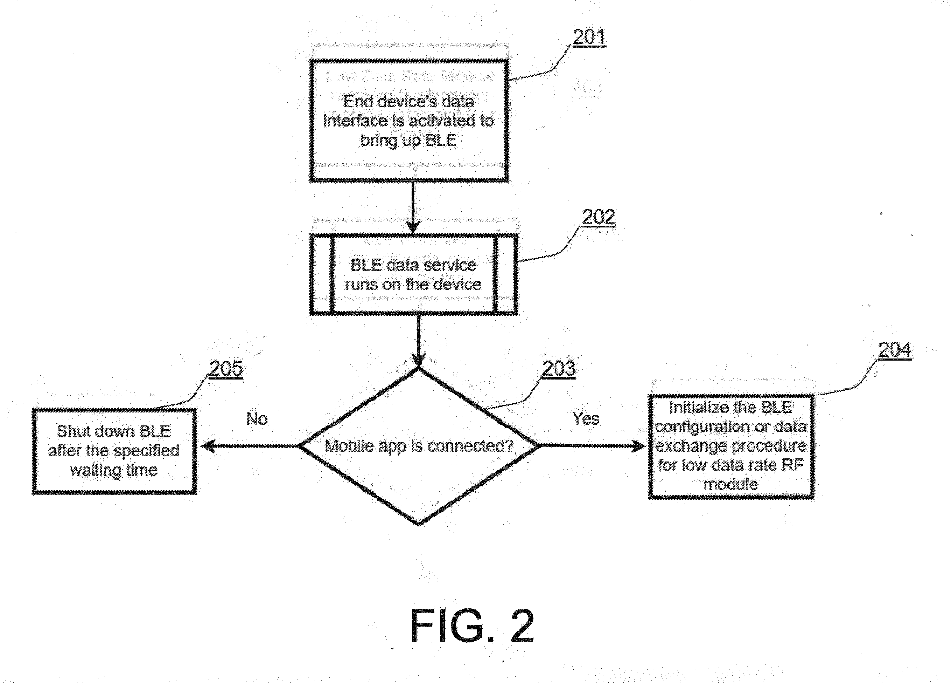

FIG. **2** represents a process used to activate the Bluetooth service of the end device physically according an embodiment of the invention. The data interface is used to provide the physical access to the users, for example, the button, USB or UART which will communicate with the microcontroller **102** through the data interface **103.**

Users get access to the device and activate the Bluetooth according to the programming logic 201, and the Bluetooth microcontroller response to the activation **202.**
The BLE service waits for the mobile application to connect, if there is no Bluetooth connection, the service will be turned off according to the programming logic after the specified waiting time **205.** This will help to save power for the end devices and then turn it to the normal operation mode when there is no configuration or data exchange needed.

A successful mobile application connection will initiate the BLE configuration or data exchange logic **204,** mainly for the low data rate RF module and the data interface.
For example, to configure different data rates and sleeping intervals and read the status of the data interface like I2C or SPI.

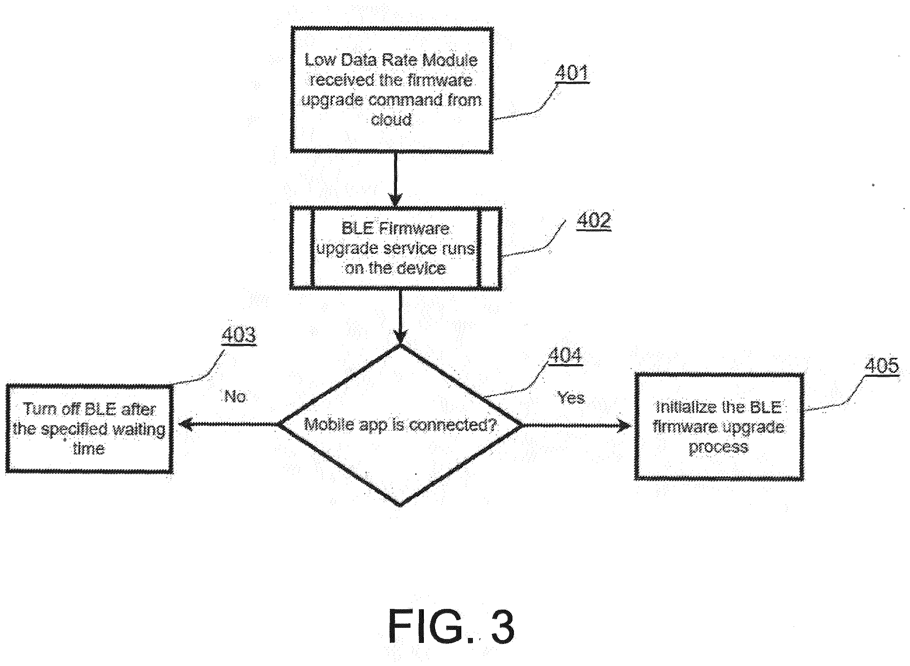

FIG. **3** represents a process used to activate the Bluetooth service of the end device physically according an embodiment of the invention. Low data rate RF module will receive the commands that issued by cloud through the gateway **401.** Then the commands are parsed by the Bluetooth microcontroller to activate the BLE firmware upgrade service **402.** The programming logic **404** will check whether the mobile application is connected or not. If there is no BLE connection after the specified waiting time like 1 hour, the BLE firmware service will be turned off for saving the power and returning to the normal operation mode **403.**

A successful mobile application connection will initiate the BLE firmware upgrade service **405,** mainly for upgrading the firmware of the Bluetooth microcontroller.
This process is defined by the Bluetooth microcontroller manufacturer according to the SDK provided.

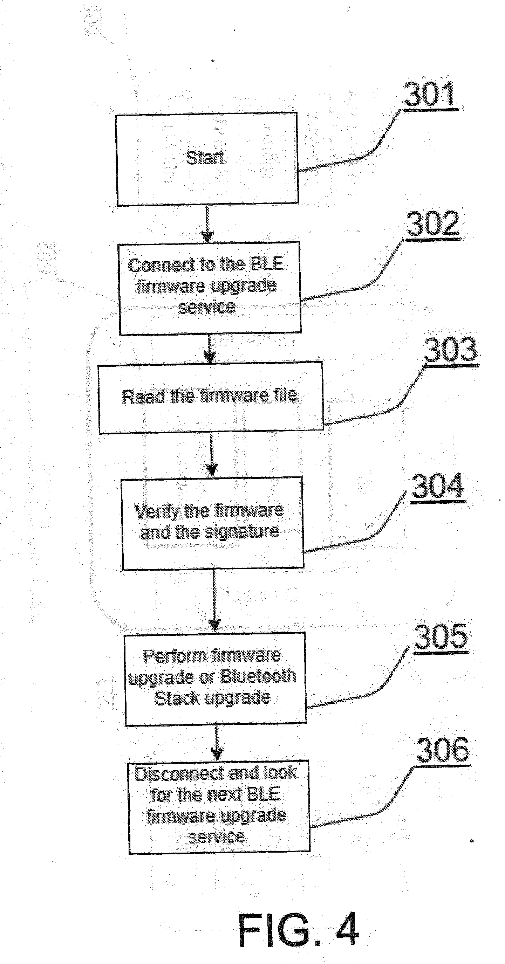

FIG. **4** represents a flowchart of the mobile application for firmware upgrade according to and embodiment of the invention. The application should run on the mobile devices that have BLE functionalities. It will try to connect the Bluetooth firmware upgrade service near the mobile device **302,** and read the firmware that is going to be send to the end device **303.** There should be a verification of the role and the integrity of the firmware **304,** then transfer the firmware according to the process provided by the SDK **305.** After the firmware has been successfully upgraded, the application will disconnect the BLE service and then move to the next available device that is going to be upgraded **306.**

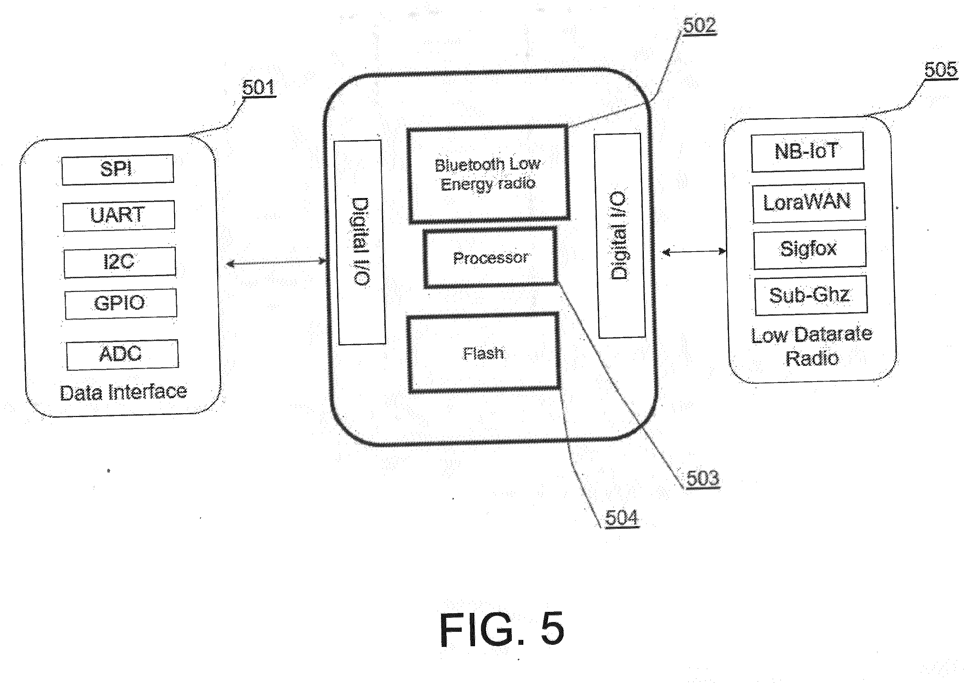

FIG. **5** represents a block diagram of the Bluetooth microcontroller according to an embodiment of the invention. The data interface 501 is actually the digital I/O that connects to the Bluetooth processor **503.** And the low data rate module **505** is connected to the process through digital I/O as well, which is controlled by the processor according to the firmware and its driver that stored in the Flash **504.** The BLE radio **502** is the module that transmit and receive the Bluetooth packet for the end device.

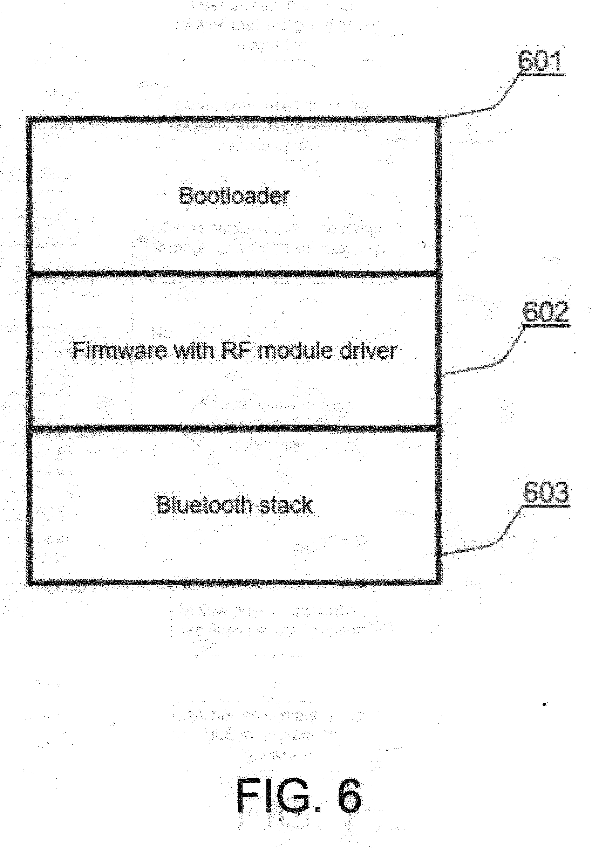

FIG. **6** represents a block diagram of the flash that mentioned in the **504** according to an embodiment of the invention. The memory map consists of three parts, Bootloader 601, Firmware with the low data rate RF module driver **602** and the Bluetooth stack **603.** The said firmware upgrade and configuration method for the low data rate RF module is mainly at the **602.W**

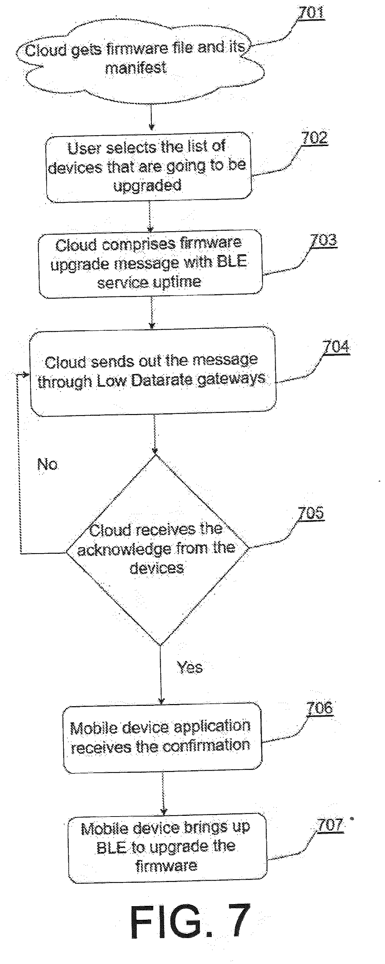

FIG. **7** represents a flow chart of the remote cloud according to an embodiment of the invention. The firmware and its manifest are stored in the remote cloud **701,** and then the user specifies the version of the firmware for the list of devices **702.** The cloud comprises the firmware upgrade command with the specified service uptime **703,** for instance, 3 hours. The low data rate commands are sent by the gateways **704** that controlled by the cloud, if the acknowledgement **705** is received from the device, the cloud will notify the mobile application the BLE service is successfully configured **706,** otherwise it will try to reach out the end device again. At the end of the process, the mobile application will connect to the device as the process described in FIG. **4****.**

## Claims

1. A system for upgrading a firmware of an end device (108) and configuration of low data rate radio frequency, RF, module (104) of the end device, said system comprising:
- the end device comprising a Bluetooth microcontroller (102), a data interface (103) and the low data rate RF module (104), wherein the low data rate RF module (104) is adapted to run on regulated Industrial, Scientific and Medical ISM, bands,
- a low data rate gateway (109) adapted to communicate with the end device through the low data rate RF module,
- a Bluetooth-enabled mobile device adapted to run a mobile application (101),
- a remote cloud server (105) adapted to be connected to the mobile application and to the low data rate gateway,
wherein the remote cloud server is adapted to issue commands and to communicate said commands to the end device through the low data rate gateway, and wherein said commands are for activating a Bluetooth firmware upgrade service of the end device,
wherein the low data rate RF module is adapted to receive the commands through the low data rate gateway, and wherein said commands are parsed by the Bluetooth microcontroller to activate the Bluetooth firmware upgrade service,
wherein the mobile application is adapted to establish,using Bluetooth on the mobile device, a connection to the Bluetooth firmware upgrade service for upgrading the firmware of the end device and for configuring the low data rate module,
wherein the mobile application is adapted to perform an upgrade of the firmware of the end device by sending the firmware to the end device through the Bluetooth connection.

2. The system according to claim 1, wherein the Bluetooth microcontroller (102) is adapted to store the firmware and a driver for the Bluetooth microcontroller and for the low data rate RF module (104).

3. The system according to claim 1, wherein the remote cloud server (105) is adapted to control the low data rate gateway (109) to communicate with the end device (108) directly.

4. The system according to claim 1, wherein the low data rate RF module (104) and the gateway (109) are adapted to have a range that is longer than the range of Bluetooth.

5. The system according to claim 4, wherein the low data rate RF module (104) and the gateway (109) are adapted to run on the licensed or unlicensed frequency bands with a bandwidth less than 250kHz.

6. A method performed by a system for upgrading a firmware of an end device (108) and configuration of low data rate radio frequency, RF, module (104) of the end device, said system comprising:
- the end device comprising a Bluetooth microcontroller (102), a data interface (103) and the low data rate RF module (104), wherein the low data rate RF module (104) is adapted to run on regulated Industrial, Scientific and Medical ISM, bands,
- a low data rate gateway (109) adapted to communicate with the end device through the low data rate RF module,
- a Bluetooth-enabled mobile device adapted to run a mobile application (101),
- a remote cloud server (105) adapted to be connected to the mobile application and to the low data rate gateway,
said method comprising:
- issuing by the remote cloud server, commands and communicating said commands to the end device through the low data rate gateway, wherein said commands are for activating a Bluetooth firmware upgrade service of the end device,
- receiving, by the low data rate RF module, the commands through the low data rate gateway,
parsing, by the Bluetooth microcontroller, said commands to activate the Bluetooth firmware upgrade service,
- establishing, by the mobile application using Bluetooth on the mobile device, a connection to the Bluetooth firmware upgrade service for upgrading the firmware of the end device and for configuring the low data rate module,
- performing by the mobile application, an upgrade of the firmware of the end device by sending the firmware to the end device through the Bluetooth connection.

7. The method according to claim 6, further comprising storing, by the Bluetooth microcontroller (102), the firmware and a driver for the Bluetooth microcontroller and for the low data rate RF module (104).

8. The method according to claim 6, further comprising controlling, by the remote cloud server (105), the low data rate gateway (109) to communicate with the end device (108) directly.

9. The method according to claim 6, wherein the low data rate RF module (104) and the gateway (109) have a range that is longer than the range of Bluetooth.

10. The method according to claim 9, wherein the low data rate RF module (104) and the gateway (109) are adapted to run on the licensed or unlicensed frequency bands with a bandwidth less than 250kHz.

## Patentansprüche

1. Ein System zum Aufrüsten eines Firmenware einer Endvorrichtung (109) und Konfiguration einer Niederdatenraten-Hochfrequenz, RF, Modul (104) der Endvorrichtung, wobei das System
- die Endvorrichtung einen Bluetooth-Mikrocontroller (102), eine Datenschnittstelle (103) und das Niederdatenraten-RF-Modul (104) umfasst, wobei das Niederdaten-RF-Modul (104) angepasst ist an geregelte Industrielle, wissenschaftliche und medizinische ISM - Baemder zu laufen,
- Ein Gateway mit niedriger Datenrate (109), das dafür ausgelegt ist, mit der Endvorrichtung durch das Niederdaten-RF-Modul zu kommunizieren,
- Eine Bluetooth-fähige mobile Vorrichtung, die dafür ausgelegt ist, eine mobile Anwendung (101) zu betreiben,
- einen entfernten Cloud-Server (105), der dafür ausgelegt ist, mit der mobilen Anwendung und mit dem Gateway mit niedriger Datenrate verbunden zu werden,
wobei der Remote-Cloud-Server angepasst ist, um Befehle auszugeben und die Befehle über das Gateway mit niedriger Datenrate an das Endgerät zu übermitteln, und wobei die Befehle zum Aktivieren eines Bluetooth-Firmware-Upgrade-Dienstes der Endvorrichtung dienen,
wobei das RF-Modul mit niedriger Datenrate angepasst ist, um die Befehle durch das Gateway mit niedriger Datenrate zu empfangen, und wobei die Befehle durch den Bluetooth-Mikrocontroller analysiert werden, um den Bluetooth-Firmware-Upgrade-Dienst zu aktivieren,
wobei die mobile Anwendung angepasst ist, unter Verwendung von Bluetooth auf der mobilen Vorrichtung eine Verbindung mit dem Bluetooth-Firmware-Upgrade-Dienst zum Aufrüsten der Firmware der Endvorrichtung und zum Konfigurieren des Moduls mit niedriger Datenrate herzustellen,
wobei die mobile Anwendung angepasst ist, um eine Aktualisierung der Firmware der Endvorrichtung durch Senden der Firmware an die Endvorrichtung durch die Bluetooth-Verbindung durchzuführen.

2. System nach Anspruch 1, wobei der Bluetooth-Mikrocontroller (102) angepasst ist, um die Firmware und einen Treiber für den Bluetooth-Mikrocontroller und für das RF-Modul mit niedriger Datenrate (104) zu speichern.

3. System nach Anspruch 1, wobei der entfernte Cloud-Server (105) angepasst ist, um das Gateway mit niedriger Datenrate (109) zu steuern, um mit der Endvorrichtung (108) direkt zu kommunizieren.

4. System nach Anspruch 1, wobei das RF-Modul mit niedriger Datenrate (104) und das Gateway (109) in der Lage sind, einen Bereich zu haben, der länger ist als der Bereich von Bluetooth.

5. System nach Anspruch 4, wobei das RF-Modul mit niedriger Datenrate (104) und das Gateway (109) dafür ausgelegt sind, auf den lizenzierten oder unlizenzierten Frequenzbändern mit einer Bandbreite von weniger als 250 kHz zu laufen.

6. Verfahren, das durch ein System zum Aufrüsten einer Firmware einer Endvorrichtung (106) und Konfiguration einer Niederdatenraten- Radiofrequenz, RF, Modul (104) der Endvorrichtung durchgeführt wird, wobei das System
- die Endvorrichtung einen Bluetooth-Mikrocontroller (102), eine Datenschnittstelle (103) und das Niedrigdatenraten-RF-Modul (104) umfasst, wobei das RF-Modul mit niedriger Datenrate (104) angepasst ist, um auf regulierten Industriellen, wissenschaftlichen und medizinischen ISM-Bändern zu laufen,
- Ein Gateway mit niedriger Datenrate (109), das dafür ausgelegt ist, mit der Endvorrichtung durch das RF-Modul mit niedriger Datenrate zu kommunizieren,
- Eine Bluetooth-fähige mobile Vorrichtung, die dafür ausgelegt ist, eine mobile Anwendung (101) zu betreiben,
- einen entfernten Cloud-Server (105), der dafür ausgelegt ist, mit der mobilen Anwendung und mit dem Gateway mit niedriger Datenrate verbunden zu werden,
wobei das Verfahren umfasst:
- Ausgeben von Befehlen und Kommunizieren der Befehle an die Endvorrichtung durch das Gateway mit niedriger Datenrate, wobei die Befehle zum Aktivieren eines Bluetooth-Firmware-Upgrade-Dienstes der Endvorrichtung dienen,
- Empfangen der Befehle durch das Niedrigdatenraten-RF-Modul durch das Niedrigdatenraten-Gateway,
ihre Analyse durch den Bluetooth-Mikrocontroller, wobei die Befehle den Bluetooth-Firmware-Upgrade-Dienst aktivieren,
- Aufbauen, durch die mobile Anwendung unter Verwendung von Bluetooth auf dem Mobilgerät, einer Verbindung mit dem Bluetooth-Firmware-Upgrade-Dienst zum Aufrüsten der Firmware der Endvorrichtung und zum Konfigurieren des Moduls mit niedriger Datenrate,
- Durchführen mit mobilen Anwendung, eines Aktualisierens der Firmware der Endvorrichtung durch Senden der Firmware an die Endvorrichtung durch Bluetooth-Verbindung.

7. Verfahren nach Anspruch 6, ferner umfassend das Speichern der Firmware und eines Treibers für den Bluetooth-Mikrocontroller und für das RF-Modul mit niedriger Datenrate (104) durch den Bluetooth-Mikrocontroller (102).

8. Verfahren nach Anspruch 6, das ferner das Steuern durch den entfernten Cloud-Server (105) umfasst, wobei das Gateway mit niedriger Datenrate (109) direkt mit der Endvorrichtung (108) kommuniziert.

9. Verfahren nach Anspruch 6, wobei das RF-Modul mit niedriger Datenrate (104) und das Gateway (109) einen Bereich aufweisen, der länger ist als der Bereich von Bluetooth.

10. Verfahren nach Anspruch 9, wobei das RF-Modul mit niedriger Datenrate (104) und das Gateway (109) angepasst sind, um auf den lizenzierten oder unlizenzierten Frequenzbändern mit einer Bandbreite von weniger als 250 kHz zu laufen.

## Revendications

1. Un système de mise à niveau d'un micrologiciel d'un dispositif d'extrémité (109) et de configuration d'un module radiofréquence (RF) à faible débit de données (104) du dispositif d'extrémité, ledit système comprenant :
- le dispositif d'extrémité comprenant un microcontrôleur Bluetooth (102), une interface de données (103) et le module RF à faible débit de données (104), le module RF à faible débit de données (104) étant conçu pour fonctionner sur des bandes ISM industrielles, scientifiques et médicales régulées,
- une passerelle à faible débit de données (109) conçue pour communiquer avec le dispositif d'extrémité par l'intermédiaire du module RF de faible données,
- un dispositif mobile activé par Bluetooth conçu pour exécuter une application mobile (101),
- un serveur en nuage distant (105) conçu pour être connecté à l'application mobile et à la passerelle à faible débit de données,
Le serveur en nuage distant étant conçu pour émettre des commandes et pour communiquer lesdites commandes au dispositif d'extrémité par l'intermédiaire de la passerelle à faible débit de données, et lesdites commandes étant destinées à activer un service de mise à niveau de micrologiciel Bluetooth du dispositif d'extrémité,
Le module RF à faible débit de données étant conçu pour recevoir les commandes par l'intermédiaire de la passerelle à faible débit de données, et lesdites commandes étant analysées par le microcontrôleur Bluetooth pour activer le service de mise à niveau de micrologiciel Bluetooth,
L'application mobile étant conçue pour établir, à l'aide de Bluetooth sur le dispositif mobile, une connexion au service de mise à niveau de micrologiciel Bluetooth pour mettre à niveau le micrologiciel du dispositif d'extrémité et pour configurer le module de faible débit de données,
L'application mobile étant conçue pour effectuer une mise à niveau du micrologiciel du dispositif d'extrémité en envoyant le micrologiciel au dispositif d'extrémité par l'intermédiaire de la connexion Bluetooth.

2. Système selon la revendication 1, dans lequel le microcontrôleur Bluetooth (102) est adapté pour stocker le micrologiciel et un pilote pour le microcontrôleur Bluetooth et pour le module RF à faible débit de données (104).

3. Système selon la revendication 1, dans lequel le serveur en nuage distant (105) est adapté pour commander la passerelle à faible débit de données (109) pour communiquer avec le dispositif d'extrémité (108) directement.

4. Système selon la revendication 1, dans lequel le module RF à faible débit de données (104) et la passerelle (109) sont adaptés pour avoir une plage qui est plus longue que la plage de Bluetooth.

5. Système selon la revendication 4, dans lequel le module RF à faible débit (104) et la passerelle (109) sont adaptés pour fonctionner sur les bandes de fréquences sous licence ou sans licence avec une largeur de bande inférieure à 250 kHz.

6. Un procédé mis en oeuvre par un système pour mettre à niveau un micrologiciel d'un dispositif d'extrémité (106) et une configuration d'un module radiofréquence, RF, à faible débit de données (104) du dispositif d'extrémité, ledit système comprenant :
- le dispositif d'extrémité comprenant un microcontrôleur Bluetooth (102), une interface de données (103) et le module RF à faible débit de données (104), le module RF à faible débit de données (104) étant conçu pour fonctionner sur des bandes d'ISM industrielles, scientifiques et médicales régulées,
- une passerelle à faible débit de données (109) conçue pour communiquer avec le dispositif d'extrémité par l'intermédiaire du module RF à faible débit de données,
- un dispositif mobile activé par Bluetooth conçu pour exécuter une application mobile (101),
- un serveur en nuage distant (105) conçu pour être connecté à l'application mobile et à la passerelle à faible débit de données,
Ledit procédé comprenant :
- émettre par le serveur de nuage distant, des commandes et communiquer lesdites commandes au dispositif d'extrémité par l'intermédiaire de la passerelle de faible débit de données, lesdites commandes étant destinées à activer un service de mise à niveau de premier logiciel Bluetooth du dispositif d'extrémité,
- la réception, par le module RF à faible débit de données, des commandes par l'intermédiaire de la passerelle à faible débit de données,
L'analyse, par le microcontrôleur Bluetooth, desdites commandes pour activer le service de mise à niveau de micrologiciel Bluetooth,
- établir, par l'application mobile à l'aide de Bluetooth sur le dispositif mobile, une connexion au service de mise à niveau de micrologiciel Bluetooth pour mettre à niveau le micrologiciel du dispositif d'extrémité et pour configurer le module de faible débit de données,
- réalisation par l'application mobile, d'une mise à niveau du micrologiciel du dispositif d'extrémité par envoi du micrologiciel au dispositif d'extrémité par l'intermédiaire de la connexion Bluetooth.

7. Procédé selon la revendication 6, comprenant en outre le stockage, par le microcontrôleur Bluetooth (102), du micrologiciel et d'un pilote pour le microcontrôleur Bluetooth et pour le module RF à faible débit de données (104).

8. Le procédé selon la revendication 6, comprenant en outre la commande, par le serveur en nuage distant (105), de la passerelle à faible débit de données (109) pour communiquer avec le dispositif d'extrémité (108) directement.

9. Procédé selon la revendication 6, dans lequel le module RF à faible débit de données (104) et la passerelle (109) ont une plage qui est plus longue que la plage de Bluetooth.

10. Procédé selon la revendication 9, dans lequel le module RF à faible débit de données (104) et la passerelle (109) sont adaptés pour fonctionner sur les bandes de fréquences sous licence ou sans licence avec une largeur de bande inférieure à 250 kHz.
